# Europäisches Patentamt

# European Patent Office

# Office européen des brevets

(19)

(11) Veröffentlichungsnummer: **0 070 909**
**B1**

(12) **EUROPÄISCHE PATENTSCHRIFT**

(45) Veröffentlichungstag der Patentschrift:
**04.06.86**

(51) Int. Cl.⁴: **B 23 K 1/00**, B 23 K 13/00

(21) Anmeldenummer: **81105822.1**

(22) Anmeldetag: **23.07.81**

(54) **Vorrichtung zum Induktionslöten von aus dünnwandigen Rohren bestehenden Rahmenkonstruktionen, insbesondere Zweiradrahmen.**

(43) Veröffentlichungstag der Anmeldung:
**09.02.83 Patentblatt 83/6**

(45) Bekanntmachung des Hinweises auf die Patenterteilung:
**04.06.86 Patentblatt 86/23**

(84) Benannte Vertragsstaaten:
**AT BE CH FR GB IT LI LU NL SE**

(56) Entgegenhaltungen:
**GB - A - 842 120
US - A - 2 803 731**

**PRODUCT ENGINEERING, Band 31, Nr. 38, September 1960, Seite 168 New York, U.S.A. "Fabrication and production processes"**

(73) Patentinhaber: **Smit Ovens B.V., Groenestraat 265, NL-6500 AB Nijmegen (NL)**

(72) Erfinder: **Winters, Simon F.A., Prinsenlaan 4, Nijmegen (NL)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

## Beschreibung

Die Erfindung betrifft eine Vorrichtung zum Induktionslöten einer aus dünnwandigen Rohren bestehenden Rahmenkonstruktion, insbesondere eines Sternpunktes am Zweiradrahmen, wobei mit der Vorrichtung auch unter Schutzgasatmosphäre zu arbeiten ist, mit Induktionsspulen, die in Arbeitsstellung nahe den Lötstellen bringbar sind.

Insbesondere in der niederländischen Fahrradindustrie werden Fahrrad- und Mopedrahmen, also aus dünnwandigen Rohren bestehende Rahmenkonstruktionen, hergestellt, indem die Rohrenden in den Sternpunkten, beispielsweise also dort, wo später die Tretkurbel liegen wird, hartgelötet werden. Hierzu wird der Sternpunkt mit Hilfe von mehreren, kranzförmig angeordneten Erdgasbrennern auf Löttemperatur erhitzt, bis die Verlauftemperatur des Lotes erreicht ist. Nach Herausnehmen der gelöteten Konstruktion aus der Flamme lässt man die Lötstelle abkühlen. Da während dieses Vorganges eine starke Verzunderung der Rahmenkonstruktion eingetreten ist, sind kostspielige Nachbehandlungen der Konstruktion erforderlich, die erhebliche Kosten bedingen.

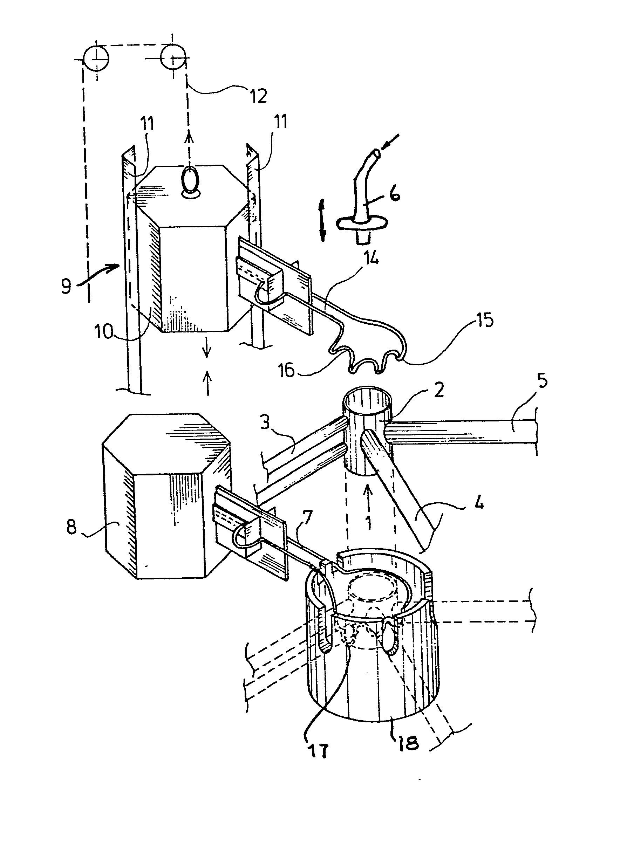

Diese Art der Herstellung wird durchgeführt, obwohl es bekannt ist (vgl. E. Lüder, «Handbuch der Löttechnik», Verlag Technik Berlin, 1952, S. 295/298), die Fahrradrahmenfertigung mit Hilfe des Induktionslötverfahrens durchzuführen. Weiterhin zeigt Bild 357 des vorgenannten Werkes ein Lötgerät zum Induktionslöten von Fahrradrahmen, insbesondere von deren Sternpunkten, das an eine Induktionslötanlage angeschlossen wird. Das Gerät ist aufklappbar und enthält Passstücke mit eng anliegenden Spulen. Die in dem vorgenannten Werk dargestellten Induktionsspulen sind nicht geeignet für die Fahrrad-Massenfertigung, wo es erforderlich ist, in einem Arbeitsgang den gesamten Rahmen in einem Stück zu fertigen, ohne dass er der Schutzgasatmosphäre zwischenzeitlich wieder entnommen wird.

Es stellt sich demnach die Aufgabe, eine für die Massenfertigung geeignete Vorrichtung zum Induktionslöten von aus dünnwandigen Rohren bestehenden Rahmenkonstruktionen anzugeben, die auch unter Schutzgasatmosphäre unter weitgehender Vermeidung manueller Tätigkeiten eingesetzt werden kann.

Diese Aufgabe wird mit einer Vorrichtung der eingangs genannten Art gelöst, bei der jeder der dem Lötbereich des Sternpunktes jeweils zu beiden Seiten der Rahmenkonstruktion insbesondere paarig zugeordneten Induktionsspulen, die den Konturen der Verbindungsstelle in Form eines Kranzes von Halb- bis Dreiviertelbögen nachgebildet sind, ein gesonderter Frequenzgenerator zugeordnet ist, der mit der Induktionsspule starr verbunden ist, und bei der weiterhin die Generatoren so geschaltet sind, dass zwischen zwei gegenüberliegenden Spulen im Arbeitsbereich eine Feldlinien-Addition auftritt.

Mit Hilfe dieser Induktionsspulen wird ein auf den zu erwärmenden Bereich beschränktes Induktionsfeld erzeugt und werden die Lötstellen erwärmt. Dabei liegen die Frequenzen der Induktionsspulen bei etwa 500–10 000 Hz, weil diese sogenannten Mittelfrequenzen relativ leicht durch Thyristor-Generatoren erzeugt werden können. Es sind aber auch Hochfrequenz-Induktoren bekannt, die bei ca. 100 kHz arbeiten. Die Forschung arbeitet auch an der Erschliessung des Frequenzbereiches von 10–100 kHz. Die Erfindung arbeitet vorzugsweise bei Mittelfrequenzen im Bereich von 10 kHz; der Erfindungsgedanke lässt sich aber auch bei anderen Frequenzen im MF- und HF-Bereich verwirklichen. Es lassen sich hierbei auch relativ kurze Erhitzungszeiten (30–60 s) erzielen, so dass Verzundern, Oxidation und Verformung des Werkstückes vermieden werden. Vorzugsweise wird eine reduzierende Schutzgasatmosphäre gewählt, d.h. ein Gasgemisch, das einen Wasserstoffüberschuss enthält, um Sauerstoff zu binden. Der $H_2$-Gehalt ist allerdings so niedrig gewählt (<6 V.-%), dass kein explosibles Knallgasgemisch entstehen kann.

Vor dem Hartlöten wird ein Ring aus Lotmaterial dort auf das Rohrende aufgeschoben, wo ein halbrunder Teilabschnitt der Induktionsspule zu liegen kommt. Dieser erwärmt daher nach dem Einschalten des Induktionsstromes sowohl den Ring aus Lötmaterial als auch die einander gegenüberliegenden Flächen der Rohrteile, so dass es bei kurzzeitiger Erhitzung zu einem einwandfreien Fliessen des Lotes kommt. In der Löttechnik sind auch andere Methoden bekannt, das Lot bzw. auch ein Flussmittel im Bereich der Lötstelle anzubringen. Wesentlich ist eine genaue Passung und eine ausreichende, aber nicht zu hohe Temperatur, damit das Lot zum Fliessen, nicht jedoch zum Verdampfen kommt. Die örtlich hohe Temperatur hat auch zur Folge, dass freier und gebundener Sauerstoff im Bereich der Lötstelle, während diese sich auf einer Temperatur zwischen 600 und 1000 °C befindet, mit Wasserstoff aus dem Schutzgas reagiert, so dass die Oberfläche nicht oxidiert ist.

Vorzugsweise werden für die praktische Anwendung die stromführenden Teile der Induktionsspulen aus gebogenem, hohlem Metall-Rechteckprofil hergestellt. Als Material hat sich insbesondere sogenanntes Leitfähigkeitskupfer als geeignet gezeigt. Hohl müssen die Induktionsspulen deshalb sein, weil in ihrem Inneren Kühlwasser strömt. Je nach Anwendungsfall können auch andere Formen des Induktionsspulen-Profils gewählt werden, beispielsweise rund oder ovale Profile.

Weitere bevorzugte Einzelheiten der erfindungsgemässen Vorrichtung gehen aus der nachfolgenden Beschreibung anhand eines gezeichneten Ausführungsbeispieles hervor.

Die Zeichnung zeigt einen Teil einer Fahrradrahmenkonstruktion im Bereich des Tretkurbellagers sowie die Form der dort einzusetzenden Induktionsspulen.

Der in der Zeichnung dargestellte Teil einer Rahmenkonstruktion 1 besteht aus dünnwandigen Rohren, beispielsweise mit einer Wandstärke von 0,5–2 mm aus Stahl. Sie ist für einen Fahrradrahmen bestimmt. Der Ausschnitt zeigt ein Tretkurbellager 2, von dem die beiden Teile der Hinterradgabel 3, des Sattelholmes 4 und des unteren Lenkerverbindungsholmes 5 abgehen (abgebrochen dargestellt). Die genannten Teile 2–5 bilden damit einen Sternpunkt, von dem ein Fahrradrahmen noch mehrere aufweist:

– die Verbindung des Lenkerlagers mit den Lenkerverbindungsholmen,

– die unterhalb des Sattels angeordnete Verbindung der weiteren Hinterradgabel mit der Versteifungsstange und dem Sattelholm.

Diese Sternpunkte sind erfahrungsgemäss wegen der hohen Gefahr der Werkstückveränderung bei lokaler Erhitzung die am schwierigsten zu handhabenden Lötverbindungen.

Im vorliegenden Fall wird in entsprechende Bohrungen des Tretkurbellagers 2 jeweils ein Rohrende der Teile 3–5 eingeschoben, wobei vor dem Einschieben ein Ring aus Hartlot übergestreift wird. Dieser Ring wird in den Bereich der später herzustellenden Lötstelle geschoben. Das Hartlot schmilzt bei Arbeitstemperaturen oberhalb 450 °C, z.B. zwischen 600 und 1000 °C. Durch die Kapillarwirkung der nahe beieinanderliegenden Rohrwandungen verteilt sich das geschmolzene Lot.

Es werden im wesentlichen dieselben Materialien und Anbringemethoden verwendet, die auch bei dem Gasflamm-Lötverfahren verwendet werden. Das Lot soll keine korrodierenden Metalle enthalten. Das Verfahren bringt aufgrund der weitgehenden Abkapselung von reagierenden Gasen durch das Schutzgas die Möglichkeit, verschiedene Lotlegierungen zu verwenden.

Nach Vorbereitung der zu lötenden Rahmenkonstruktion wird diese als Ganzes in eine unter Schutzgasatmosphäre stehende Kammer (Gehäuse) eingeschleust. Die Kammer (nicht dargestellt) ist mit Sichtfenstern versehen, so dass kontrolliert werden kann, dass die vorbereitete Rahmenkonstruktion auf bestimmten Auflagepunkten ruht. Eine feststehende Induktionsspule 7, deren vorstehendes Ende die Rohre des Sternpunktes mit mehreren, hintereinanderliegenden Halbbögen 17 umfasst, ist innerhalb der Kammer angeordnet. Die Induktionsspule ist wassergekühlt. Sie ist in an sich bekannter Weise an einen Mittelfrequenz-Generator 8, der bei 10 kHz betrieben wird, angeschlossen. Der Mittelfrequenz-Generator enthält ein an sich bekanntes Netzwerk mit einer Thyristor-Schaltung, die für die angegebene Arbeitszeit einen Strom von 20 000 A bei 10 kHz erzeugen kann. Dabei hängen Stromstärke und Frequenz wesentlich von der jeweiligen Rohrstärke ab. Spulenteile und Rahmenkonstruktion ruhen während des Induktionsvorganges in mit Aussparungen versehenen Füssen 18.

Ein weiterer Mittelfrequenz-Generator 9 ist ebenfalls dem Erhitzungsbereich «Tretkurbellager» zugeordnet. Dieser Generator besteht aus einem blockartigen Gehäuse 10, das an Gleitschienen 11 in senkrechter Richtung geführt wird. Mit Hilfe eines Hebemechanismus 12 kann der Generator 9 angehoben werden, so dass die starr mit ihm verbundene Spule 14 gehoben und gesenkt werden kann. Nach dem Einbringen und Festlegen der Rahmenkonstruktion 1 senkt sich der Generator 9 ab. Die Induktionsspule 14 umfasst mit ihren Halbkreisbögen 15, 16 die Lötstellen der Rahmenkonstruktion. Die oben und unten liegenden Spulen sind über ihre Generatoren so geschaltet, dass eine Feldlinien-Addition im Arbeitsbereich auftritt.

Nachdem die weiteren Spulen für alle Lötstellen der Rahmenkonstruktion, die in ähnlicher Weise – wie dargestellt – beschaffen sind, abgesenkt bzw. in Stellung gebracht sind, wird der Induktionsstrom für etwa 30–60 s eingeschaltet. Diese kurze Zeit genügt, um das Werkstück und das Hartlot zu erwärmen und zum gegenseitigen Kontakt bzw. Fliessen zu bringen. Es wird jedoch vermieden, dass die Oberflächen verzundern oder die Werkstücke sich verformen.

Neben den aktiven Spulen können auch passiv sogenannte Blechpakete in den Bereichen der Lötstellen angeordnet werden. Es handelt sich hierbei um aus der Induktionsschweisstechnik bekannte Blöcke aus Blechlamellen, die aufgrund ihrer örtlich hohen Permeabilität den Fluss der Induktion im Bereich der zu erwärmenden Stellen erhöhen.

Bei der Konstruktion der Induktionsspulen ist darauf zu achten, dass mehrere benachbarte Lötstellen paarig von zwei Seiten umfasst werden, wobei der zu erwärmende Bereich auf die Ausdehnung des Induktionsfeldes beschränkt ist. Die freiliegenden Teile der Induktionsspulen bestehen aus einem gebogenen, hohlen Kupferrechteckprofil, das mit einem hitzebeständigen Glasgewebe umwickelt ist. Für jeden zu lötenden Bereich der Rahmenkonstruktion sind besondere Induktionsspulen zu formen. Gemeinsam ist diesen Spulen, dass sie jeweils im Bereich der Rohre Bögen 15–17 in Form von Halb- bis Dreiviertelkreisen umfassen, die in Form eines Kranzes aneinander gereiht sind. In Arbeitsstellung sollen sie möglichst die Lötstellen an den Stellen, wo das Lot fliessen soll, eng umfassen.

Ausserdem sind im Gehäuse Düsen 6 an flexiblen Schläuchen angeordnet, mit denen das Schutzgas in die Rahmenkonstruktion eingeblasen werden kann. Luftreste werden ausgespült. Weiterhin ist im Gehäuse ein Ventilator vorgesehen, der die Atmosphäre umwälzt und für eine Homogenisierung sorgt.

Während des Induktionsbetriebes werden in der Anlaufphase zunächst hohe Leistungen aufgebracht, später geringere, so dass über die Verlaufzeit von 30–60 s im Bereich der Lötstelle eine gleichmässige Temperatur von 900–1000 °C herrscht.

Darauf zu achten ist, dass die freien Bereiche der sich in der Arbeitsstellung gegenüberliegenden Elektroden nicht so gross sind, dass unterkühlte Bereiche entstehen. Vorzugsweise sind die Induktionsspulen je zu einem Paar einer beweglichen und einer festen Induktionsspule zusammengefasst. Es ist jedoch auch möglich, beide Induktionsspulen beweglich zu machen, was beispielsweise bei speziellen Formen und Abmessungen der Rahmenkonstruktion oder zur Beschleunigung des Ein- und Ausfahrens der Rahmenkonstruktion empfehlenswert sein kann. Erwähnenswert ist ferner noch, dass die Art der Induktionsspulen mit beweglichen Generatoren es ermöglicht, dass auch Rahmenkonstruktionen, die aus geschlossenen Rohr-Polygonzügen bestehen, ohne weiteres gelötet werden können.

Zusätzlich zu den aussen an die Rahmenkonstruktion anzulegenden Induktionsspulen können auch weitere verwendet werden, die in die Rahmenkonstruktion hineingesteckt werden können, z.B. in die Öffnung des Tretkurbellagers 2. Mit Hilfe derartiger Spulen kann die Temperatur noch besser dosiert und lokalisiert werden.

**Patentansprüche**

1. Vorrichtung zum Induktionslöten einer aus dünnwandigen Rohren (3, 4, 5) bestehenden Rahmenkonstruktion, insbesondere eines Sternpunktes (2) am Zweiradrahmen, wobei mit der Vorrichtung auch unter Schutzgasatmosphäre zu arbeiten ist, mit Induktionsspulen (7, 14), die in Arbeitsstellung nahe den Lötstellen bringbar sind, dadurch gekennzeichnet, dass jeder der dem Lötbereich des Sternpunktes (2) jeweils zu beiden Seiten der Rahmenkonstruktion insbesondere paarig zugeordneten Induktionsspulen (7, 14), die den Konturen der Verbindungsstelle in Form eines Kranzes von Halb- bis Dreiviertelbögen (15–17) nachgebildet sind, ein gesonderter Frequenzgenerator (8, 9) zugeordnet ist, der mit der Induktionsspule (7, 14) starr verbunden ist, und weiterhin dadurch gekennzeichnet, dass die Generatoren (8, 9) so geschaltet sind, dass zwischen zwei gegenüberliegenden Spulen (7, 14) im Arbeitsbereich eine Feldlinien-Addition auftritt.

2. Vorrichtung nach Anspruch 1, dadurch gekennzeichnet, dass die stromführenden Teile der Induktionsspulen (7, 14) aus gebogenen, hohlen Metall-Rechteckprofilen bestehen.

**Claims**

1. An apparatus for the induction soldering of frames formed of thin tubes (3, 4, 5), especially a star point (2) in bicycle frames, the apparatus being adapted to be operated also under a shielding gas atmosphere, comprising induction coils (7, 14) adapted to be brought to a working position close to the soldering points, characterized in that each of the induction coils (7, 14) which are associated, especially in pairs, to the soldering region of the star point (2) on opposite sides of the frame and which are conformed to the contours of the joint in the shape of a rim of semicircles to three-quarter circles, has associated therewith a separate frequency generator (8, 9) being rigidly connected to the induction coil (7, 14), and further characterized in that said generator (8, 9) are connected in such a manner that an addition of the flux lines occurs between a pair of oppositely disposed coils (7, 14) in the working area.

2. The apparatus according to claim 1, characterized in that the current-carrying portions of the induction coils (7, 14) comprise bent, hollow metallic rectangular profiles.

**Revendications**

1. Dispositif pour braser par induction une structure de cadre se composant de tubes à paroi mince (3, 4, 5), notamment un nœud central en étoile (2) sur un cadre de véhicule à deux roues, le dispositif permettant également d'opérer sous une atmosphère gazeuse protectrice et comportant des bobines d'induction (7, 14) susceptibles d'être amenées en position de travail à proximité des zones de brasage, caractérisé en ce que chacune des bobines d'induction (7, 14) qui sont associées notamment par paires à la zone de brasage du nœud central en étoile (2) respectivement des deux côtés de la structure de cadre et qui sont agencées en correspondance aux contours de la zone de jonction sous la forme d'une couronne de parties incurvées (15 à 17) représentent des segments compris entre la moitié et les trois quarts d'un cercle, est associée à un générateur de fréquence particulier (8, 9) qui est relié rigidement à la bobine d'induction (7, 14), et caractérisé en outre en ce que les générateurs (8, 9) sont branchés de telle sorte qu'il se produise entre deux bobines (7, 14) placées l'une en regard de l'autre dans la zone de travail une addition des lignes de champ.

2. Dispositif selon la revendication 1, caractérisé en ce que les parties conductrices de courant des bobines d'induction (7, 14) sont formées de profilés rectangulaires métalliques creux cintrés.